# EUROPÄISCHE PATENTANMELDUNG

(11) **EP 0 940 626 A1**
(43) Veröffentlichungstag der Anmeldung: **08.09.1999**
(21) Anmeldenummer: 99102274.0
(22) Anmeldetag: 05.02.1999
(51) Int. Cl.: F21Q 3/02, B64F 1/20, E01F 9/06

(54) **Signallicht für den Einbau in Verkehrsflächen**

(30) Priorität: 02.03.1998 CH 49198
(71) Anmelder: Erni, Ernst R., 6442 Gersau (CH)
(72) Erfinder: Erni, Ernst R., 6442 Gersau (CH); Brand, Andreas, 8304 Wallisellen (CH)
(74) Vertreter: Blum, Rudolf Emil Ernst

(57) **Zusammenfassung**

Das Signallicht besitzt ein Gehäuse (2), welches in einer Verkehrsfläche (1) versenkt wird. Im Deckel (3) sind z.B. zwei Prismenoptiken (6) vorgesehen, welche das Licht einer oder mehrerer Lichtquellen (8, 9) bündeln und umlenken. Hierzu ist die Lichtquelle (8, 9) so ausgestaltet, dass sie auf jede Optik (6) ein im wesentlichen paralleles Strahlenbündel wirft. Dieses wird in der Optik (6) derart gesammelt, dass es beim Austritt zumindest in einer Richtung immer noch parallel ist aber eine höhere Intensität aufweist. Hierzu ist jede Optik z.B. mit einer zylindrisch-konvexen Eintrittsfläche und einer zylindrisch-konkaven Spiegelfläche ausgestaltet. Das Signallicht weist eine sehr geringe Überhöhung auf.

## Beschreibung

Die Erfindung betrifft ein Signallicht für den Einbau in Verkehrsflächen gemäss Oberbegriff der unabhängigen Ansprüche.

Signallichter dieser Art für den im wesentlichen bodenebenen Unterflur-Einbau werden insbesondere als Führungselemente auf Flughäfen aber auch im Strassenverkehr verwendet.

US 5,438 495 offenbart ein Signallicht, das als Optik ein Umlenkprisma aufweist, welches die Lichtstrahlen gegen die Horizontale hin umlenkt. In den meisten Anwendungen ist es jedoch von grosser Bedeutung, dass das Signallicht so flach gestaltet ist, dass es die Verkehrsfläche nur gering überragt. Diese Anforderung wird vom Signallicht gemäss US 5,438 495 nur beschränkt erfüllt und es kann in der Praxis zu Problemen kommen, wenn die Vorrichtung überrollt wird oder wenn die Verkehrsfläche gereinigt bzw. geräumt werden muss.

Um diese Probleme zu umgehen, werden die Lichtaustrittsöffnungen oftmals zumindest teilweise versenkt. Die entsprechenden Vertiefungen können sich jedoch mit Wasser und Schmutz füllen, so dass ein Ablauf und Reinigungszyklen vorgesehen sein müssen. Ansonsten ist mit einer Lichteinbusse zu rechnen.

Es stellt sich deshalb die Aufgabe, ein Signallicht der eingangs genannten Art in möglichst einfacher Weise so auszugestalten, dass diese Probleme zumindest teilweise vermieden werden.

Diese Aufgabe wird vom Signallicht gemäss den unabhängigen Ansprüchen erfüllt.

In einer Ausführung wird es durch die Verwendung einer gebogenen Spiegelfläche möglich, einen sehr kompakten und robusten Aufbau der Optik zu ermöglichen, da die Spiegelfläche das auf sie treffende konvergente Licht nicht nur umlenkt, sondern gleichzeitig auch in Konvergenz bzw. Divergenz beeinflussen kann.

Vorzugsweise wandelt die Spiegelfläche in mindestens einer Richtung konvergentes Licht in Licht um, welches in der entsprechenden Richtung parallel ist. Dadurch wird eine Konzentration und Bündelung des Lichtfeldes erreicht.

Unter Licht, welches in mindestens einer Richtung im wesentlichen parallel ist, wird Licht verstanden, welches in dieser Richtung im wesentlichen nicht divergent ist, d.h. nur einen geringen Öffnungswinkel von z.B. einigen Grad aufweist.

Insbesondere wenn die Optik das eintretende Licht sammelt und sodann einen austretenden Lichtstrahl erzeugt, der zumindest in einer Richtung im wesentlichen parallel ist, wird eine hohe Lichtintensität erreicht, ohne dass eine grosse Austrittsfläche benötigt wird.

Der Austrittsbereich der Optik kann von der Oberfläche eines transparenten Körpers gebildet werden, die im wesentlichen senkrecht zum austretenden Licht steht. Dadurch wird die Austrittsoberfläche wesentlich kleiner, was die Gefahr einer Verschmutzung oder Beschädigung verringert.

Der Eintrittsbereich der Optik wird vorzugsweise von einer konvex oder zylindrisch nach aussen gekrümmten Oberfläche des transparenten Körpers gebildet. Dadurch kann eine Sammlung des Lichts zumindest in einer Richtung erreicht werden. Es ist jedoch auch denkbar, hierzu Fresnel-Linsen, Hologramme, gebogene Spiegel oder eine Indexgradienten-Optik vorzusehen.

Auch die Spiegelfläche wird vorzugsweise von einem gekrümmten Teil der Oberfläche des transparenten Körpers gebildet, um einen möglichst einfachen und robusten Aufbau zu erhalten.

Das Signallicht ist auch geeignet für Lichtquellen aus Leuchtdioden. Diese werden vorzugsweise als zweidimensionale Matrix ausgestaltet und so ausgerichtet, dass sie ein Lichtbündel erzeugen, welches in mindestens einer Richtung konvergent ist.

Es können Leuchtdioden unterschiedlicher Farben eingesetzt und gemeinsam oder separat betrieben werden.

In einer zweiten Ausführung der Erfindung besitzt die Optik mindestens einen transparenten Körper, dessen Eingangsfläche das Licht in mindestens einer Richtung konvergent ablenkt und dessen Ausgangsfläche dieses konvergente Licht wieder parallel macht. Das auf diese Weise konzentrierte Licht benötigt eine nur kleine Austrittsöffnung. Es kann z.B. entweder durch einen zweiten transparenten Körper geführt und dort abgelenkt werden, oder es kann das Signallicht direkt verlassen.

Weitere bevorzugte Ausführungen und Vorteile der Erfindung ergeben sich aus den abhängigen Ansprüchen und aus der nun folgenden Beschreibung anhand der Figuren. Dabei zeigen:
Fig. 1 einen Schnitt durch eine bevorzugte Ausführung der Erfindung,
Fig. 2 eine Ansicht der Ausführung nach Fig. 1 von oben,
Fig. 3 einen Schnitt durch die Optik der Ausführung nach Fig. 1,
Fig. 4 eine zweite Ausführung der Optik,
Fig. 5 eine dritte Ausführung der Optik,
Fig. 6 eine vierte Ausführung der Optik,
Fig. 7 eine fünfte Ausführung der Optik ohne Spiegel,
Fig. 8 eine Aufsicht auf eine Ausführung des Signallichts mit in Horizontalrichtung divergentem Strahlengang, und
Fig. 9 eine sechste Ausführung der Erfindung.

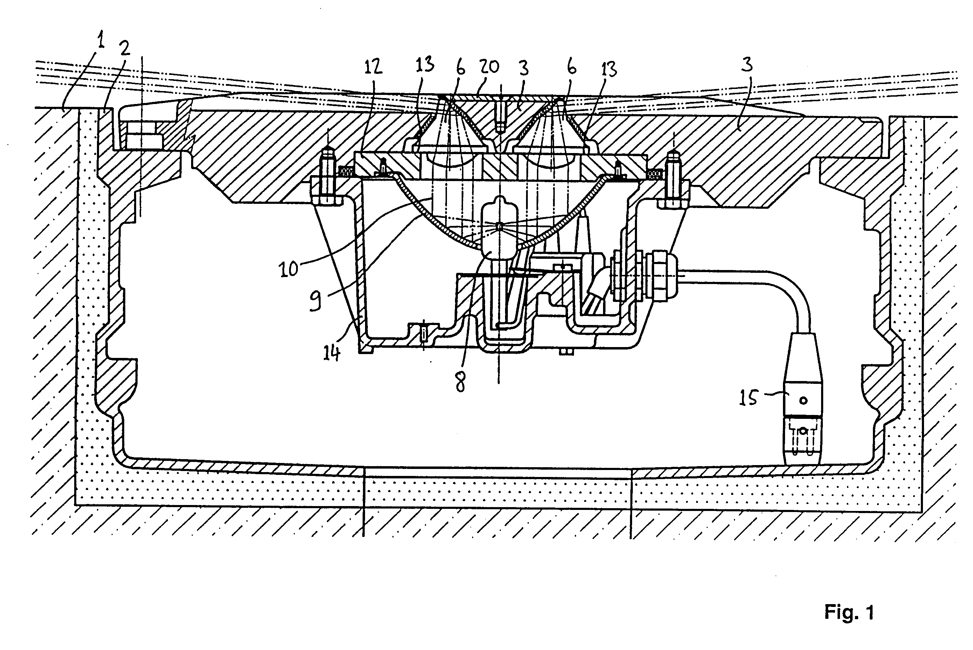

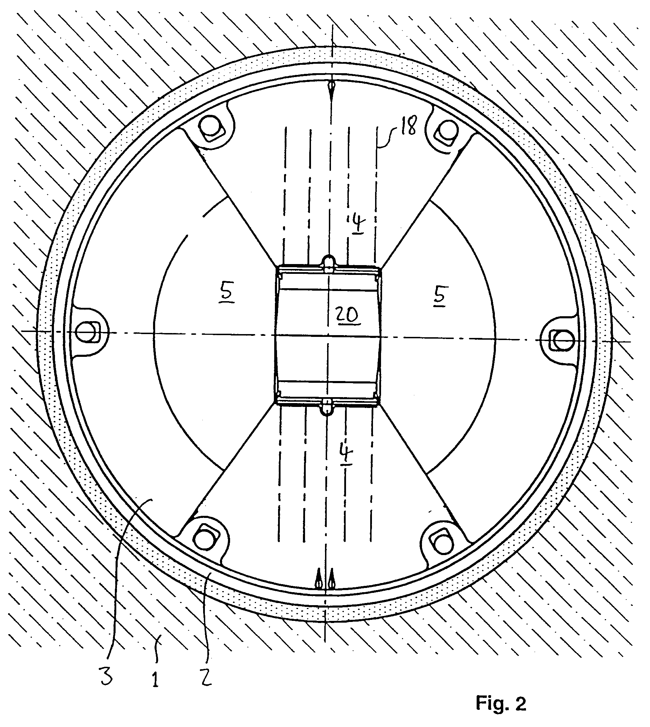

Der Grundaufbau einer bevorzugten Ausführung der Erfindung ergibt sich aus den Figuren 1 und 2. Hier wird eine Unterflur-Lichtarmatur gezeigt, wie sie z.B. auf der Rollbahn 1 eines Flughafens eingesetzt werden kann. Sie besitzt ein Gehäuse 2, welches in die Rollbahn 1 einzementiert ist. Auf dem Gehäuse 2 ruht ein runder, überfahrfester Deckel 3, in welchem zwei flache Segmente 4 ausgespart sind, die zwischen zwei um wenige Millimeter erhöhten Segmenten 5 liegen. Es können auch mehr als zwei flache Segmente 4 oder nur eines vorgesehen sein. In der Mitte jedes vertieften Segments 4 ist eine Optik 6 angeordnet, auf deren genaueren Aufbau weiter unten eingegangen wird. Im Zentrum des Gehäuses 2, unterhalb des Deckels 3 befindet sich eine Lampe 8, welche in einem parabolischen Reflektor 9 angeordnet ist, so dass deren Licht im wesentlichen senkrecht nach oben als im wesentlichen paralleles Strahlenbündel 10 auf die Optiken 6 trifft. Die Lichtquelle besteht aus Lampe 8 und Reflektor 9. Der Reflektor 9, gegebenenfalls auch die Lichtquelle mit Lampe 8, ist geeignet an eine Montageplatte 12 angeschraubt, welche ihrerseits jede der Optiken 6 an der jeweiligen Basis 13 stützt. Die Lichtquelle ist in einer Halterung 14 angeordnet und über eine Steckverbindung 15 mit einer Stromquelle verbunden. Die Lichtquelle kann auch separat im unteren Teil montiert sein.

Das hier gezeigte Signallicht eignet sich generell für den im wesentlichen bündigen Einbau in Verkehrsflächen. Es überragt die Verkehrsfläche um maximal 6 mm, weist keine Vertiefungen auf, in denen sich Wasser ansammeln könnte, und ist so robust ausgeführt, dass es überfahren werden kann.

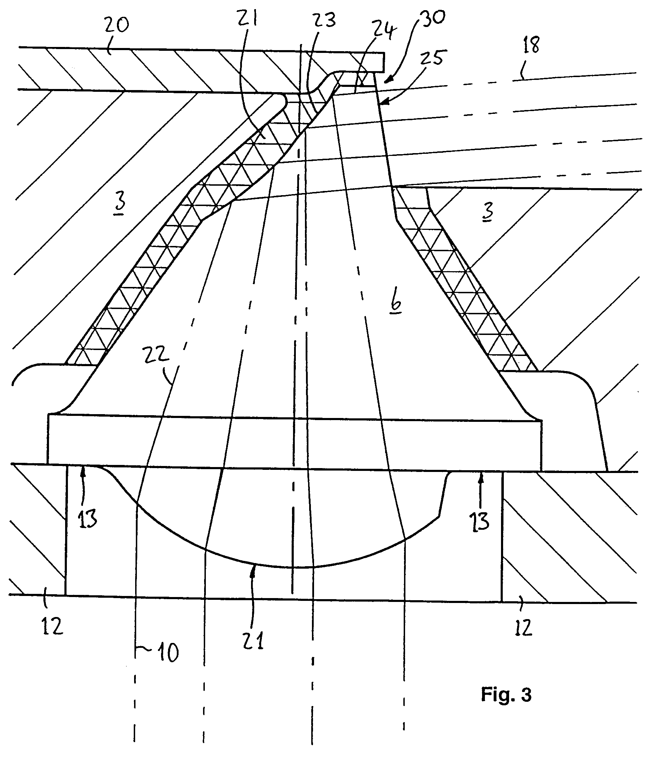

Die Funktionsweise der Optik 6 ist aus Fig. 3 ersichtlich. Deren Aufgabe besteht darin, das von unten auf sie auftreffende parallele Strahlenbündel 10 zu sammeln, gegen die Horizontale umzulenken und als wiederum paralleles Strahlenbündel 18 auszustrahlen. In der Ausführung nach Fig. 3 besteht die Optik 6 aus einem prismaförmigen, transparenten Körper, vorzugsweise aus Borsilikatglas, und ist in der Richtung senkrecht zu Fig. 3 im wesentlichen translationssymmetrisch aufgebaut. Borsilikatglas wird wegen seiner Temperaturschock- oder Temperaturwechselbeständigkeit bevorzugt.

Wie bereits erwähnt, ruht die Optik 6 mit ihrer Basis 13 auf der Montageplatte 12, welche ihr einen guten Halt verleiht. Gegen oben wird sie von einer Deckplatte 20 geschützt, welche im Deckel 3 verschraubt ist. Gegen den Deckel 3 ist die Optik mit einer aushärtbaren Kittmasse 21 abgedichtet, so dass das Innere der Vorrichtung gut abgeschlossen ist und gleichzeitig thermische Dilatationen der Bauteile, Schock und Vibrationen aufgefangen werden können.

Im Gehäuse ist eine Öffnung 30 vorgesehen, bei welcher das austretende Lichtbündel bzw. die Austrittsfläche 25 der Optik 6 angeordnet ist.

Der Eingangsbereich der Optik 6 wird von einer etwa zylindrischen, nach aussen gebogenen Fläche 21 gebildet, welche die auftreffenden Strahlen 10 in ein konvergentes Strahlenbündel 22 umlenkt, d.h. gegen oben sammelt. Das konvergente Strahlenbündel 22 trifft auf eine Spiegelfläche 23 der Optik, welche von einem verspiegelten, zylindrisch nach innen gebogenen Oberflächenbereich gebildet wird. Die Biegung der Spiegelfläche 23 ist so bemessen, dass das konvergente Strahlenbündel 22 in ein paralleles Strahlenbündel 24 umgelenkt wird, das einen Elevationswinkel von ca. 5° besitzt. Das Strahlenbündel 24 trifft im wesentlichen senkrecht auf eine Austrittsfläche 25 der Optik 6 und verlässt das Signallicht als Strahlenbündel 18 durch eine Öffnung 30 des Gehäuses.

Durch die Sammelwirkung der gebogenen Fläche 21 wird die Querschnittfläche des Lichtfelds beim Durchgang durch die Optik verringert, so dass deren Intensität, d.h. Strahlungsleistung pro Durchlassquerschnittseinheit (cm²) am Ausgang höher ist als am Eingang, und der Eintrittsbereich hat eine grössere Querschnittfläche als der Austrittsbereich. Dies erlaubt es, die Austrittsfläche 25 sehr klein zu gestalten, so dass die Überhöhung der Vorrichtung gering bleibt. Die geringe Grösse der Austrittsfläche 25 verringert auch die Gefahr einer Beschädigung, z.B. bei Schneeräumungs- oder Reinigungsarbeiten. In diesem Zusammenhang ist auch der Umstand von Vorteil, dass die Austrittsfläche 25 plan und somit schwieriger funktionell zu beschädigen ist.

Vorzugsweise sind die Eintritts- und Austrittsflächen 21 bzw. 25 der Optik 6 mit geeigneten Beschichtungen versehen. Insbesondere kann auf der Eintrittsfläche 21 ein dichroitisches Filter angebracht werden, welches Hitzestrahlung im Infrarotbereich reflektiert, oder welches nur Licht eines bestimmten Wellenlängenbereichs durchlässt. Auf der Austrittsfläche 25 kann z.B. eine schmutzabweisende und/oder kratzfeste Beschichtung aufgebracht werden. Alternativ oder zusätzlich hierzu kann ausgangsseitig der Austrittsfläche 25 eine transparente Schutzplatte angeordnet werden, die auch optisch wirksam ausgebildet sein kann, z.B. mit einer Fresnel-Struktur.

Die Ausführung der Optik gemäss Fig. 3 ist bevorzugt, weil sie mit nur einem Glaskörper auskommt. Dadurch werden Herstellung und Justierung einfacher und Reflexionsverluste geringer. Es ist jedoch auch denkbar, die Optik in anderer Weise auszuführen.

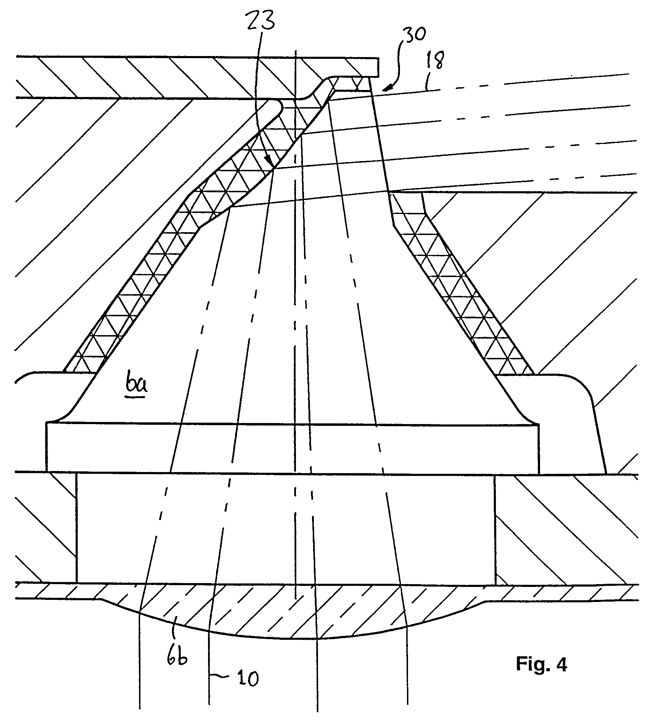

So zeigt z.B. Fig. 4 eine Ausführungsvariante, bei welcher die Optik aus einem Prismenteil 6a und einer plankonvexen Zylinderlinse 6b besteht. Die plankonvexe Zylinderlinse 6b fokussiert das eintretende Strahlenbündel 10 in gleicher Weise wie die gekrümmte Eintrittsfläche 21 der ersten Ausführung. Die Umlenkung der Strahlen erfolgt wiederum über einen zylindrischen Spiegel 23.

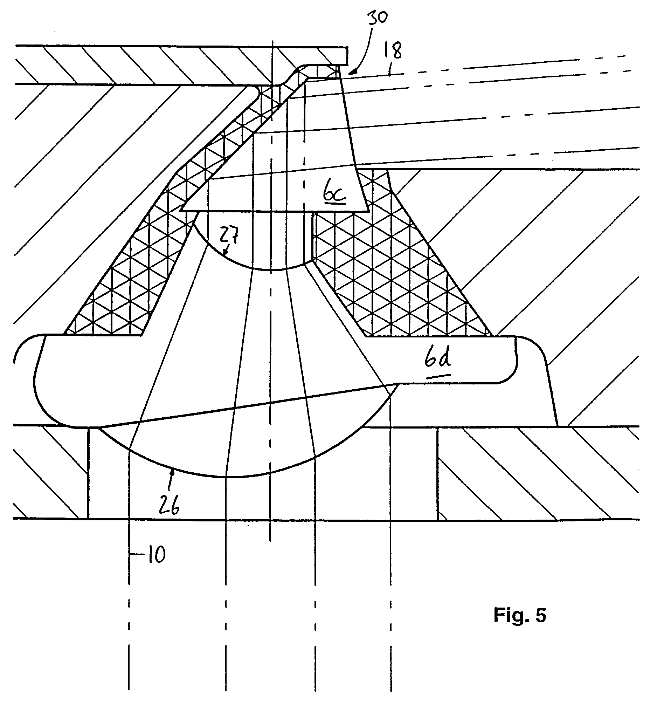

Fig. 5 zeigt eine weitere Ausführung der Optik mit einem Prismenkörper 6c und einer konvex-konkaven Sammeloptik 6d. Hier wird das eintretende Strahlenbündel 10 von der zylindrisch nach aussen gebogenen Eintrittsfläche 26 gesammelt und von der zylindrisch nach innen gebogenen Oberfläche 27 wieder in ein paralleles Strahlenbündel umgewandelt. Prismenkörper 6c wirkt als Spiegelprisma zur Umlenkung des Strahlenbündels, ohne dass dessen Divergenz dabei geändert wird.

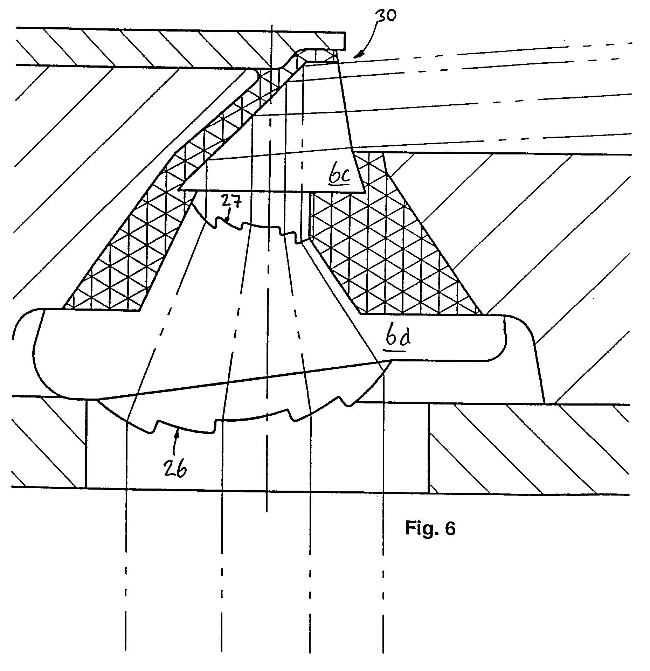

Die Ausführung nach Fig. 6 ist im wesentlichen gleich aufgebaut. Sie zeigt jedoch, dass die Flächen 26 und 27 auch als Fresnel-Linsen, resp. Zylinderlinsensegmente ausgestaltet sein können. In gleicher Weise ist es möglich, holographische Linsen zu verwenden, insbesondere wenn anstelle der Glühlampe 8 eine im wesentlichen monochromatische Halbleiterlichtquelle eingesetzt wird.

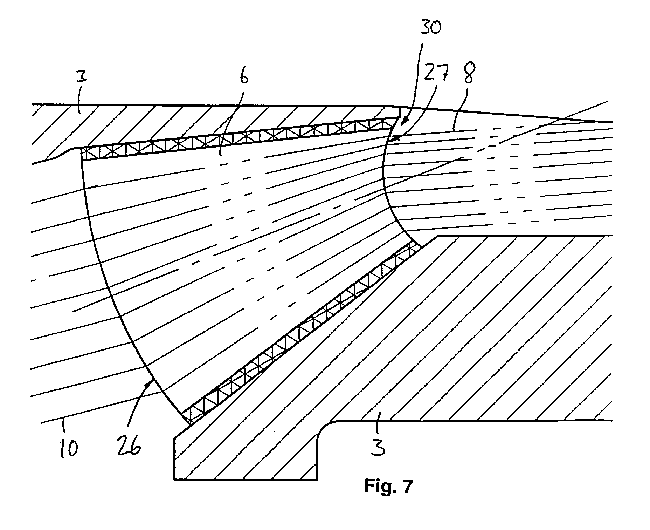

Fig. 7 zeigt eine weitere Variante der Optik 6, bei welcher davon ausgegangen wird, dass das parallele Strahlenbündel 10 von der Lichtquelle bereits im wesentlichen flach verläuft, so dass höchstens eine geringe Ablenkung notwendig ist und ein Spiegel entfallen kann. In diesem Fall kann als Optik 6 ein konvex-konkaver Glaskörper eingesetzt werden, dessen zylindrisch nach aussen gebogene Eintrittsfläche 26 das Licht sammelt und dessen zylindrisch nach innen gebogene Austrittsfläche ein wiederum im wesentlichen paralleles Strahlenbündel 18 mit gewünschter Inklination erzeugt. Das so erzeugte Strahlenbünden 18 verlässt das Signallicht ohne weitere Ablenkung.

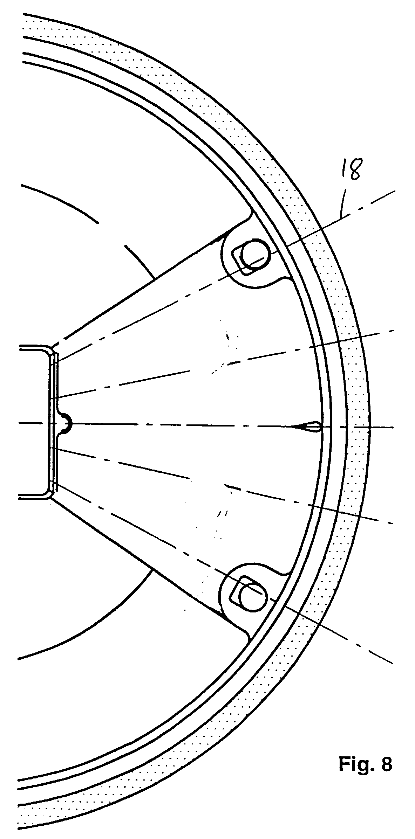

In den hier diskutierten Ausführungsbeispielen wurde davon ausgegangen, dass das austretende Strahlenbündel 18 im wesentlichen parallel ist, d.h. dass dessen Divergenz klein ist und z.B. ±5° beträgt. Je nach Anforderung muss jedoch nur die Divergenz in Vertikalrichtung so klein sein, während (z.B. in Rollwegkurven) die horizontale Divergenz grösser sein sollte. Ein entsprechendes Strahlenfeld 18 ist in Fig. 8 illustriert. Dieses Strahlenfeld ist nur in vertikaler Richtung "parallel", d.h. nicht divergent (und auch nicht konvergent), während es in horizontaler Richtung eine grosse Divergenz besitzt.

Zur Erzeugung eines Strahlenfelds 18 gemäss Fig. 8 gibt es verschiedene Möglichkeiten. So kann bei der Ausführung nach Fig. 3 z.B. die Eintrittsfläche 21 in der Richtung senkrecht zur Zeichenebene konvex oder konkav ausgestaltet werden oder mit Streurippen versehen sein, die parallel zur Zeichenebene verlaufen. Es ist jedoch auch denkbar, die Spiegelfläche 23 oder die Ausgangsfläche 25 zur Erzeugung eines divergenten Strahlenfelds in Horizontalrichtung auszugestalten, wiederum durch geeignete Krümmung oder Streukörper. Schliesslich ist es auch denkbar, dass die Lichtquelle so ausgestaltet wird, dass bereits das eintretende Strahlenbündel in einer Richtung (in der Richtung senkrecht zur Zeichenebene von Fig. 3) divergent ist.

Durch eine konkave Gestaltung der Eintrittsfläche 21 bzw. 26 auch in Richtung senkrecht zur Zeichenebene von Fig. 3 kann erreicht werden, dass das Strahlenbündel 22 in zwei Richtungen konvergent ist. Dadurch wird eine kleinere Spiegelfläche 23 und Austrittsfläche 25 benötigt. Soll das austretende Strahlenbündel 18 trotzdem in beiden Richtungen parallel sein, d.h. eine geringe Divergenz in Horizontal- und Vertikalrichtung aufweisen, so kann z.B. die Spiegelfläche 23 oder die Austrittsfläche 25 mit einer entsprechenden Krümmung versehen werden, die die Divergenz des Strahlenbündels 24 in horizontaler Richtung wieder kompensiert.

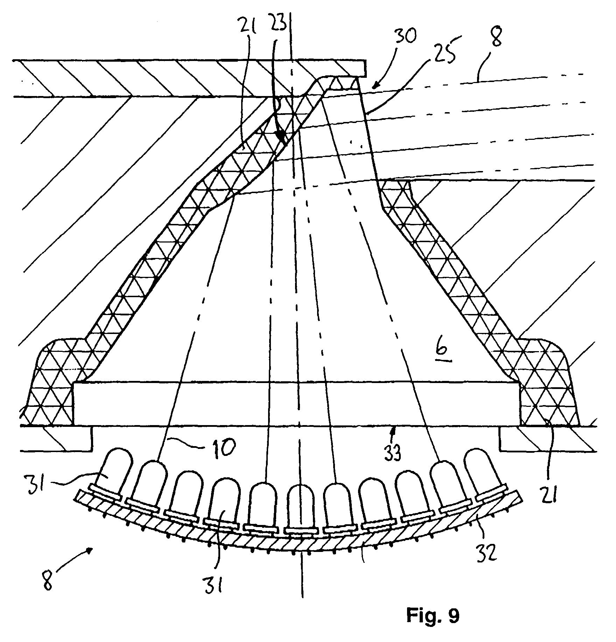

Fig. 9 zeigt eine sechste Ausführung der vorliegenden Erfindung mit Leuchtdioden (LEDs) 31 als Lichtquelle 8. Die LEDs sind auf einer gemeinsamen Unterlage 32 angebracht, z.B. einer gebogenen gedruckten Schaltung, und als zweidimensionale Matrix auf einer zylindrischen Fläche angeordnet. Fig. 9 zeigt einen Schnitt durch diese Matrix, wobei sich die zylindrische Fläche senkrecht zur Zeichenebene erstreckt. Die Achsen der LEDs treffen sich in einer gemeinsamen Linie, d.h. die LEDs erzeugen ein zylindrisch konvergentes Strahlenfeld 10.

Die Optik 6 besteht aus einem einstückigen Prisma mit einer ebenen Eingangsfläche 33 zur Aufnahme des Lichts der LEDs 31. Dieses Licht beaufschlagt den gebogenen Spiegel 23, der von einer Spiegeloberfläche der Optik 6 gebildet wird. Die Biegung des Spiegels 23 ist so gewählt, dass das reflektierte Licht in Vertikalrichtung im wesentlichen parallel ist, d.h. die Apertur des Lichts in Vertikalrichtung ist klein. Das reflektierte Licht tritt durch die Austrittsfläche 25 und die Öffnung 30 aus.

Vorzugsweise werden LEDs verschiedener Farben benutzt. Sie können entweder alle zusammen betrieben werden, um weisses Licht zu erzeugen, oder sie können blockweise betrieben werden, um farbiges Licht zu erzeugen, z.B. zur Erzeugung verschiedener optischer Signale.

In den soweit gezeigten Ausführungsbeispielen wurde die Optik in einer Kittmasse 21 eingebettet. Es ist jedoch auch denkbar, die Optik mit einem geeigneten Manschettendicht- und Wechselsystem auszustatten, damit sie nötigenfalls in einfacher Weise ausgewechselt werden kann.

## Patentansprüche

1. Signallicht für den im wesentlichen bündigen Einbau in Verkehrsflächen mit mindestens einer Lichtquelle (8, 9) und mindestens einer Optik (6) zum Aufbereiten des Lichtes der Lichtquelle, wobei die Optik (6) mindestens eine Spiegelfläche (23) aufweist, dadurch gekennzeichnet, dass das auf die Spiegelfläche (23) auftreffende Licht in mindestens einer Richtung konvergent ist und dass die Spiegelfläche gebogen ist.

2. Signallicht nach Anspruch 1, dadurch gekennzeichnet, dass die Lichtquelle (8, 9) derart ausgestaltet ist, dass deren Licht (10) in mindestens einer Richtung im wesentlichen parallel ist beim Auftreffen auf einen Eintrittsbereich (21; 26) der Optik (6), und dass die Optik (6) ausgestaltet ist, um das eintretende Licht derart zu sammeln, dass es beim Austreten aus einem Austrittsbereich (25) der Optik (6) wiederum in mindestens einer Richtung im wesentlichen parallel ist, aber eine höhere Intensität aufweist als im Eintrittsbereich.

3. Signallicht nach Anspruch 2, dadurch gekennzeichnet, dass der Eintrittsbereich (21; 26) eine grössere Querschnittsfläche aufweist als der Austrittsbereich (25).

4. Signallicht nach einem der vorangehenden Ansprüche, dadurch gekennzeichnet, dass das auf den Eintrittsbereich (21; 26) der Optik auftreffende Licht (10) gegen die Spiegelfläche (23) in mindestens einer Richtung gesammelt wird.

5. Signallicht nach einem der vorangehenden Ansprüche, dadurch gekennzeichnet, dass die Spiegelfläche (23) derart gebogen ist, dass das von der Spiegelfläche (23) reflektierte Licht in mindestens einer Richtung ein im wesentlichen paralleles Lichtbündel ist.

6. Signallicht nach einem der vorangehenden Ansprüche, dadurch gekennzeichnet, dass im Eintrittsbereich (21; 26) der Optik eine Sammeloptik zur Erzeugung von in mindestens einer Richtung konvergenten Lichtstrahlen (22) angeordnet ist.

7. Signallicht nach einem der vorangehenden Ansprüche, dadurch gekennzeichnet, dass das Licht (10) von unten in die Optik (6) eintritt, und dass das Licht von der Spiegelfläche (23) gegen die Horizontale hin abgelenkt wird.

8. Signallicht nach einem der vorangehenden Ansprüche, dadurch gekennzeichnet, dass der Austrittsbereich (25) von einer Oberfläche eines transparenten Körpers gebildet ist, wobei die Oberfläche im wesentlichen senkrecht zur Elevationsrichtung des austretenden Lichts (18) steht.

9. Signallicht nach einem der vorangehenden Ansprüche, dadurch gekennzeichnet, dass die Optik (6) von einem transparenten Körper und der Eintrittsbereich (21) von einer konvex oder zylindrisch nach aussen gekrümmten Oberfläche des Körpers gebildet wird.

10. Signallicht nach Anspruch 9, dadurch gekennzeichnet, dass die Spiegelfläche (23) von einer gewölbten Oberfläche des Körpers gebildet wird, insbesondere von einer konkav oder zylindrisch nach innen gewölbten Oberfläche.

11. Signallicht nach einem der Ansprüche 9 oder 10, dadurch gekennzeichnet, dass der Körper im wesentlichen Prismenform aufweist, wobei der Eintrittsbereich (21) in einer Basis (13) des Prismas angeordnet ist, und wobei in einem der Basis gegenüber liegenden Kantenbereich des Prismas die Spiegelfläche (23) und der Austrittsbereich (25) angeordnet sind.

12. Signallicht nach einem der vorangehenden Ansprüche, dadurch gekennzeichnet, dass im Eintrittsbereich (21; 26) eine Ablenkoptik angeordnet ist, an deren Oberfläche ein dichroitischer Spiegel oder Farbglas angeordnet ist.

13. Signallicht nach einem der vorangehenden Ansprüche, dadurch gekennzeichnet, dass die Optik (6) an ihrem höchsten Punkt durch eine Deckplatte (20) abgedeckt ist.

14. Signallicht nach einem der vorangehenden Ansprüche, dadurch gekennzeichnet, dass es als Lichtquelle eine zweidimensionale Matrix von Leuchtdioden (31) aufweist, welche Licht erzeugen, welches konvergent auf die Spiegelfläche (23) auftrifft.

15. Signallicht nach Anspruch 14, dadurch gekennzeichnet, dass die Matrix zur Erzeugung von konvergentem Licht gekrümmt ist.

16. Signallicht für den im wesentlichen bündigen Einbau in Verkehrsflächen, insbesondere nach einem der vorangehenden Ansprüche, mit mindestens einer Lichtquelle (8, 9) und mindestens einer Optik (6) zum Aufbereiten des Lichtes der Lichtquelle, dadurch gekennzeichnet, dass die Optik einen ersten transparenten Körper aufweist, welcher eine Eintrittsfläche (21, 26) besitzt ausgestaltet zur Ablenkung von eintretendem Licht und zur Erzeugung eines in mindestens einer Richtung konvergenten Strahlenfelds, und welcher eine Austrittsfläche (27) besitzt ausgestaltet zur Ablenkung des konvergenten Strahlenfelds und zur Erzeugung eines in der mindestens einen Richtung parallelen Strahlenbündels.

17. Signallicht nach Anspruch 16, dadurch gekennzeichnet, dass die Lichtquelle (8, 9) derart ausgestaltet ist, dass deren Licht (10) in mindestens einer Richtung im wesentlichen parallel ist beim Auftreffen auf einen die Eintrittsfläche (21, 26) der Optik (6), und dass die Optik (6) ausgestaltet ist, um das eintretende Licht derart zu sammeln, dass es beim Austreten aus einem Austrittsbereich (25) der Optik (6) wiederum in mindestens einer Richtung im wesentlichen parallel ist, aber eine höhere Intensität aufweist als bei der Eintrittsfläche (21, 26).

18. Signallicht nach einem der Ansprüche 16 oder 17, dadurch gekennzeichnet, dass die Eintrittsfläche (21, 26) und/oder die Austrittsfläche (27) gebogen und/oder als Fresnellinsen ausgestaltet sind.

19. Signallicht nach einem der Ansprüche 16 - 18, dadurch gekennzeichnet, dass die Optik (6) einen zweiten transparenten Körper (6c) aufweist, welcher ausgestaltet ist als Spiegel zur Ablenkung des vom ersten Körper austretenden Lichts.

20. Signallicht nach Anspruch 19, dadurch gekennzeichnet, dass der zweite Körper (6c) beabstandet vom ersten Körper (6d) angeordnet ist.

21. Signallicht nach einem der Ansprüche 16 - 18, dadurch gekennzeichnet, dass das vom ersten Körper austretende Licht das Signallicht im wesentlichen ohne weitere Ablenkung verlässt.
